(19) Europäisches Patentamt
European Patent Office
Office européen des brevets

(11) **EP 2 058 209 B1**

(12) **EUROPÄISCHE PATENTSCHRIFT**

(45) Veröffentlichungstag und Bekanntmachung des Hinweises auf die Patenterteilung:
**09.03.2011 Patentblatt 2011/10**

(51) Int Cl.:
***B62D 5/04*** *(2006.01)*

(21) Anmeldenummer: **08165061.6**

(22) Anmeldetag: **25.09.2008**

(54) **Verfahren zum Ansteuern eines Motors einer Hilfkraftlenkung**

Method for controlling the motor of an assisted steering system

Procédé de commande d'un moteur d'une crémaillère de direction auxiliaire

(84) Benannte Vertragsstaaten:
**DE FR GB IT**

(30) Priorität: **06.11.2007 DE 102007000977**

(43) Veröffentlichungstag der Anmeldung:
**13.05.2009 Patentblatt 2009/20**

(73) Patentinhaber: **ZF-Lenksysteme GmbH**
**73527 Schwäbisch Gmünd (DE)**

(72) Erfinder: **Weber, Markus**
**73035, Göppingen (DE)**

(56) Entgegenhaltungen:
**EP-A- 0 987 163       DE-A1- 19 818 139**
**DE-A1- 19 913 947**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Ansteuern eines Elektromotors einer Hilfskraftlenkung, ein Steuergerät für eine solche Hilfskraftlenkung, ein Computerprogramm und ein Computerprogrammprodukt.

Bei Hilfskraftlenkungen, bei denen ein vom Fahrer vorgegebener Lenkwinkel bzw. ein Lenkmoment von einem Motorwinkel bzw. Motormoment eines Elektromotors eines Servoantriebs unterstützt wird, treten insbesondere im Stand beim schnellen Durchlenken hohe Geräusche des Getriebes und des Motors auf.

Dabei ist zu beachten, dass das Drehmoment des zur Realisierung einer variablen Lenkübersetzung vorgesehenen Elektromotors mit steigender Motordrehzahl fällt. Dies wirkt sich nachteilig auf das Überschwingverhalten und somit auf die Regelgüte aus.

In der DE 199 13 947 A1 ist ein Verfahren zum Betreiben eines Elektromotors in einer Lenkungsvorrichtung mit variabler Lenkübersetzung offenbart, welches die Aufgabe löst, das Lenkgefühl zu verbessern, indem das Auftreten von trägheitsbedingten Überschwingens des Elektromotors unterdrückt wird.
Zur Lösung dieser Aufgabe ist ein Sollgeschwindigkeitsbegrenzungsabschnitt vorgesehen, der die Solldrehzahl des Elektromotors auf einen Wert unterhalb einer voreingestellten maximalen Drehzahl begrenzt, wobei die maximale Drehzahl auf Grundlage einer Leistungskennlinie des Elektromotors eingestellt wird.

Das erfindungsgemäße Verfahren dient zum Ansteuern eines Elektromotors einer Hilfskraftlenkung in einem Kraftfahrzeug und zeichnet sich dadurch aus, dass die maximale Drehzahl des Elektromotors in einem Bereich geringer Spurstangenkräfte, in dem die Drehzahl des Elektromotors hohe werte erreichen kann derart begrenzt wird, dass eine beschränkung der Lenkgeschwindigkeit erfolgt.

Dies bedeutet, dass die maximal mögliche Drehzahl des unterstützenden Elektromotors begrenzt wird. Dies kann durch Begrenzung der maximalen Motorwinkelgeschwindigkeit bzw. des maximalen Motormoments erreicht werden. Dies hat zur Folge, dass der Fahrer ein höheres Handmoment aufbringen muss. Da die maximale Drehzahl des Elektromotors begrenzt ist, können, insbesondere bei niedrigen Fahrzeuggeschwindigkeiten, jedoch akustische Nachteile vermieden werden.

Erfindungsgemäß wird somit die Lenkunterstützung und damit die maximale Durchlenkgeschwindigkeit bzw. Motordrehzahl, d.h. dessen maximaler Gradient bzw. die Sollvorgabe des Gradienten, abhängig von mindestens einer vorzugebenden Betriebsgröße begrenzt, um auf diese Weise die Lenkung leiser zu machen.

Somit ist eine Funktionalität entwickelt, die zu einem positiven Einfluss auf die Akustik führt und die zusätzlich das Überschwingverhalten bei schnellen Lenkbewegungen verbessert.

In Ausgestaltung ist vorgesehen, dass die maximale Drehzahl des Elektromotors in Abhängigkeit der Geschwindigkeit des Kraftfahrzeugs begrenzt wird. Ergänzend oder alternativ kann vorgesehen sein, dass die maximale Drehzahl des Elektromotors in Abhängigkeit der Lenkradgeschwindigkeit begrenzt wird.

Ist somit die Fahrzeuggeschwindigkeit nahe 0 km/h und die Lenkgeschwindigkeit durch die niedrige Spurstangenkraft höher als erwünscht, so dass störende Geräusche auftreten, wird die maximale Drehzahl begrenzt. Dies kann bedeuten, dass die Lenkgeschwindigkeit der angelenkten Vorderräder auf bspw. 500-600 Grad/s begrenzt wird, so dass der Fahrer sehr gute Lenkeigenschaften hat, der akustisch kritische Bereich aber vermieden wird.

Daher kann ein positiver Einfluss auf die Akustik bei einer Hilfskraftlenkung erreicht werden und zusätzlich das Überschwingverhalten bei schnellen Lenkbewegungen verbessert werden.

Die erfindungsgemäße Hilfskraftlenkung eines Kraftfahrzeugs weist einen Servoantrieb mit einem Elektromotor und ein elektronisches Steuergerät zur Ansteuerung des Elektromotors auf. Dabei ist vorgesehen, dass das Steuergerät zur Begrenzung der Drehzahl des Elektromotors in Abhängigkeit mindestens einer Betriebsgröße ausgelegt ist. Die vorgestellte Hilfskraftlenkung ist insbesondere zur Durchführung des vorstehend beschriebenen Verfahrens geeignet.

Das erfindungsgemäße Steuergerät kann bspw. zur Durchführung eines vorstehend beschriebenen Verfahrens in einer dargelegten Hilfskraftlenkung zum Einsatz kommen und ist dazu ausgelegt, die Drehzahl eines Elektromotors für eine Hilfskraftlenkung in Abhängigkeit mindestens einer Betriebsgröße zu begrenzen.

Das erfindungsgemäße Computerprogramm umfasst Programmcodemittel, um ein Verfahren zum Betreiben einer Hilfskraftlenkung der vorstehend beschriebenen Art durchzuführen, wenn das Computerprogramm auf einem Mikroprozessor eines Computers, insbesondere in einem Steuergerät der Hilfskraftlenkung, ausgeführt wird.

Dieses Computerprogramm kann auf einem computerlesbaren Datenträger, wie bspw. einer Diskette, CD, DVD, Festplatte, einem USB Memory Stick oder ähnlichem, oder einem Internetserver als Computerprogrammprodukt gespeichert sein. Von dort kann das Computerprogramm in ein Speicherelement des Steuergeräts übertragen werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

Figur 1     zeigt eine Ausführungsform der erfindungsgemäßen Hilfskraftlenkung.

Figur 2     zeigt den Zusammenhang zwischen Spurstangenkraft und Lenkgeschwindigkeit.

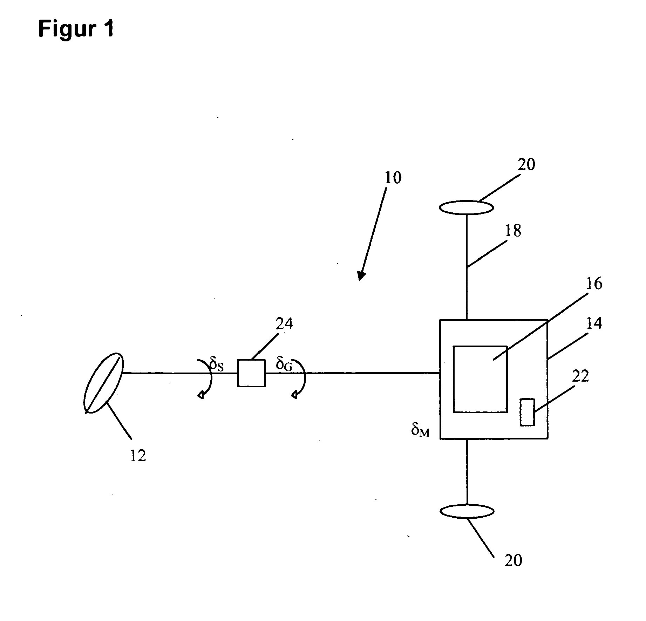

In Figur 1 ist eine Ausführungsform der erfindungsgemäßen Hilfskraftlenkung dargestellt, die insgesamt mit der Bezugsziffer 10 bezeichnet ist. Die Darstellung zeigt ein Lenkrad 12, einen Servoantrieb 14, dem ein Elektromotor 16 zugeordnet ist, und zwei über eine Vorderachse 18 verbundene Vorderräder 20, die zum Steuern des Fahrzeugs angelenkt werden. Weiterhin ist dem Servoantrieb 14 ein Steuergerät 22 zugeordnet.

Der über das Lenkrad 12 vorgegebene Lenkwinkel $\delta_S$ wird zunächst in einen Ritzelwinkel $\delta_S$ übertragen, wobei ein Lenkwinkelüberlagerungssteller 24 zum Einsatz kommen kann. Dieser Ritzelwinkel wird von einem Motorlenkwinkel $\delta_M$ des Elektromotors 16 überlagert, so dass sich an den Vorderrädern der Lenkwinkel $\delta_F$ einstellt.

Es gilt

$$i_V = \frac{\delta_S}{\delta_F}$$

und

$$\delta_M \cdot i_M + \delta_S \cdot i_d = \delta_G$$

wobei iM und $i_d$ vorzugebende Faktoren sind.

Das dargestellte Lenksystem ermöglicht einen vom Fahrer bewirkten aktiven Lenkeingriff an der Vorderachse 18 unterstützt durch den Elektromotor 16, ohne die mechanische Kopplung zwischen dem Lenkrad 12 und der Vorderachse 18 auftrennen zu müssen. Erfindungsgemäß wird dabei in bestimmten Fahrsituationen die Lenkgeschwindigkeit durch begrenzen der maximalen Drehzahl des Elektromotors 16 beschränkt.

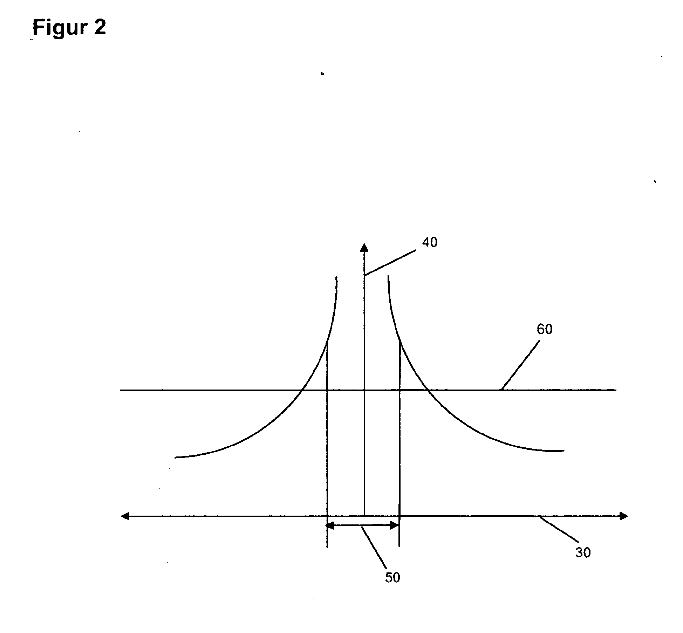

In Figur 2 ist in einem Graphen der Zusammenhang zwischen Spurstangenkraft und Lenkgeschwindigkeit aufgetragen.

In dem gezeigten Graphen ist an der Abszisse 30 die Spurstangenkraft und an der Ordinate 40 die Lenkgeschwindigkeit aufgetragen. Zu erkennen sind die hohen Lenkgeschwindigkeiten bei niedrigen Spurstangenkräften.

Ein Doppelpfeil 50 erstreckt sich über einen Bereich, in dem der Elektromotor der Hilfskraftlenkung sehr schnell drehen kann. Bei einer Geschwindigkeit von 0 km/h erfolgt, wie mit der Linie 60 verdeutlicht, eine Beschränkung der Lenkgeschwindigkeit auf 500 bis 600 Grad/s.

Es wird folglich erreicht, dass die Lenkgeschwindigkeit verringert wird, der Fahrer aber dennoch eine ausreichende Lenkperformance erfährt, wobei der akustisch kritische Bereich vermieden wird.

**Patentansprüche**

1.   Verfahren zum Ansteuern eines Elektromotors (16) einer Hilfskraftlenkung (10) in einem Kraftfahrzeug, **dadurch gekennzeichnet, dass** die maximale Drehzahl des Elektromotors (16) in einem Bereich (50) geringer Spurstangenkräfte, in dem die Drehzahl des Elektromotors hohe Werte erreichen kann, derart begrenzt wird, dass eine Beschränkung (60) der Lenkgeschwindigkeit erfolgt.

2.   Verfahren nach Anspruch 1, bei dem die maximale Drehzahl des Elektromotors (16) zusätzlich in Abhängigkeit der Geschwindigkeit des Kraftfahrzeugs begrenzt wird.

3.   Verfahren nach Anspruch 1 oder 2, bei dem die maximale Drehzahl des Elektromotors (16) zusätzlich in Abhängigkeit einer Lenkradgeschwindigkeit begrenzt wird.

4.   Hilfskraftlenkung eines Kraftfahrzeugs, die aufweist:

    einen Servoantrieb (14) mit einem Elektromotor (16), ein elektronisches Steuergerät (22) zur Ansteuerung des Elektromotors (16), **dadurch gekennzeichnet, dass** das Steuergerät (22) zur Begrenzung der Drehzahl des Elektromotors (16) in Abhängigkeit mindestens einer Betriebsgröße ausgelegt und nach einem der in den Anspüchen 1 bis 3 beanspruchten Verfahren betreibbar ist.

5.   Steuergerät (22) zum Betrieb einer Hilfskraftlenkung (10), welches dafür vorgesehen und vorbereitet ist, eines der in den Anspüchen 1 bis 3 beanspruchten Verfahren auszuführen.

6.   Computerprogramm mit Programmcodemitteln, um ein Verfahren nach einem der Ansprüche 1 bis 3 durchzuführen, wenn das Computerprogramm auf einem Mikroprozessor eines Computers, insbesondere in einem Steuergerät (22) gemäß Anspruch 5 in einer Hilfskraftlenkung (10) nach Anspruch 4, ausgeführt wird.

7.   Computerprogrammprodukt mit Programmcodemitteln, die auf einem computerlesbaren Datenträger gespeichert sind, um ein Verfahren nach einem der Ansprüche 1 bis 3 durchzuführen, wenn das Computerprogramm auf einem Mikroprozessor eines Computers, insbesondere in einem Steuergerät (22) gemäß Anspruch 5 in einer Hilfskraftlenkung (10) nach Anspruch 4, ausgeführt wird.

## Claims

1. Method for controlling an electric motor (16) of a power assisted steering system (10) in a motor vehicle, **characterized in that** the maximum rotational speed of the electric motor (16) is limited, in a range (50) of low traction rod forces in which the rotational speed of the electric motor can reach high values, in such a way that the steering speed is limited (60).

2. Method according to Claim 1, in which the maximum rotational speed of the electric motor (16) is additionally limited as a function of the speed of the motor vehicle.

3. Method according to Claim 1 or 2, in which the maximum rotational speed of the electric motor (16) is additionally limited as a function of a steering wheel speed.

4. Power assisted steering system of a motor vehicle, which has:

   a servodrive (14) with an electric motor (16), and an electronic control unit (22) for actuating the electric motor (16),
   **characterized in that** the control unit (22) is configured to limit the rotational speed of the electric motor (16) as a function of at least one operation variable and can be operated according to one of the methods claimed in Claims 1 to 3.

5. Control unit (22) for operating a power assisted steering system (10), which is configured and prepared to carry out one of the methods claimed in Claims 1 to 3.

6. Computer program with program code means for carrying out a method according to one of Claims 1 to 3, when the computer program is run on a microprocessor of a computer, in particular in a control unit (22) according to Claim 5 in a power assisted steering system (10) according to Claim 4.

7. Computer program with program code means which are stored on a computer-readable data carrier in order to carry out a method according to one of Claims 1 to 3 when the computer program is run on a microprocessor of a computer, in particular in a control unit (22) according to Claim 5 in a power assisted steering system (10) according to Claim 4.

## Revendications

1. Procédé de commande d'un moteur électrique (16) d'une direction assistée (10) dans un véhicule automobile, **caractérisé en ce que** la vitesse de rotation maximale du moteur électrique (16) dans une plage (50) de forces réduites de la barre d'accouplement, dans laquelle la vitesse de rotation du moteur peut atteindre des valeurs élevées, est limitée de telle sorte qu'il se produit une restriction (60) de la vitesse de changement de direction.

2. Procédé selon la revendication 1, selon lequel la vitesse de rotation maximale du moteur électrique (16) est en plus limitée en fonction de la vitesse du véhicule automobile.

3. Procédé selon la revendication 1 ou 2, selon lequel la vitesse de rotation maximale du moteur électrique (16) est en plus limitée en fonction d'une vitesse du volant.

4. Direction assistée d'un véhicule automobile, laquelle présenté :

   une servocommande (14) comprenant un moteur électrique (16), un module de commande électronique (22) pour commander le moteur électrique (16),
   **caractérisée en ce que** le module de commande (22) est conçu pour limiter la vitesse de rotation du moteur électrique (16) en fonction d'au moins une grandeur opérationnelle et peut fonctionner selon un procédé selon l'une des revendications 1 à 3.

5. Module de commande (22) pour commander une direction assistée (10), lequel est prévu et préparé pour mettre en oeuvre un procédé selon l'une des revendications 1 à 3.

6. Programme informatique comprenant des moyens de code de programme pour exécuter un procédé selon l'une des revendications 1 à 3 lorsque le programme informatique est exécuté sur un microprocesseur d'un ordinateur, notamment dans un module de commande (22) selon la revendication 5 dans une direction assistée (10) selon la revendication 4.

7. Programme informatique comprenant des moyens de code de programme qui sont enregistrés sur un support de données lisible par ordinateur pour exécuter un procédé selon l'une des revendications 1 à 3 lorsque le programme informatique est exécuté sur un microprocesseur d'un ordinateur, notamment dans un module de commande (22) selon la revendication 5 dans une direction assistée (10) selon la revendication 4.

**Figur 1**

**Figur 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19913947 A1